## Europäisches Patentamt

## European Patent Office

## Office européen des brevets

(11) Veröffentlichungsnummer: **0 259 593**
**A2**

(12) **EUROPÄISCHE PATENTANMELDUNG**

(21) Anmeldenummer: 87111001.1

(22) Anmeldetag: 29.07.87

(51) Int. Cl.4: **G01S 7/22** , G01S 7/06

(30) Priorität: **01.08.86 DE 3626035**

(43) Veröffentlichungstag der Anmeldung:
**16.03.88 Patentblatt 88/11**

(84) Benannte Vertragsstaaten:
**BE CH DE FR GB IT LI NL SE**

(71) Anmelder: **Siemens Aktiengesellschaft Berlin und München**
**Wittelsbacherplatz 2**
**D-8000 München 2(DE)**

(72) Erfinder: **Koelmans, Norbert, Dipl.-Ing.**
**Luitpoldstrasse 8**
**D-8034 Germering(DE)**

(54) **Überwachungsradarsystem.**

(57) Von einem Rechner (4) erhält ein Anzeigeprozessor (1) Grafikdaten, die unterteilt nach Zieldaten einerseits und konsolenspezifischen Daten bzw. Hintergrundinformationsdaten andererseits in zwei arithmetischen Logikeinheiten (2,3) unter Einbeziehung der jeweiligen Konsolenanforderungen aufbereitet und nach dieser Aufbereitung zusammengeführt und - geordnet nach Ausgabeschnittstellen (A,B,C,D) - zur Übertragung an die Bildschirmkonsolen über an die Ausgabeschnittstellen angeschlossene Auffrischungskanäle weitergegeben werden. Die Erfindung ist vorgesehen zum Einsatz bei großräumig arbeitenden Überwachungsradarsystemen mit einer Vielzahl von Bildschirmkonsolen.

FIG 3

EP 0 259 593 A2

## Überwachungsradarsystem

Die Erfindung bezieht sich auf ein Überwachungsradarsystem mit mehreren in Konsolen untergebrachten, mit unterschiedlichen Grafikdaten ansteuerbaren Bildschirmen unter Verwendung eines Anzeigeprozessors, der von einem Rechner Grafikdaten, insbesondere Zieldaten, konsolenspezifische Daten, Hintergrundinformationsdaten in Form von Linien, Kreisen, Texten, Spuren oder dergleichen, Alarmmeldungen und Schnittstellentestdaten, erhält, diese Daten unter Einbeziehung der individuellen Konsolenanforderungen aufbereitet und nach dieser Aufbereitung über mehrere Ausgabeschnittstellen an sogenannte Auffrischungskanäle an die Konsolenbildschirme zur dortigen Sichtbarmachung weiterleitet.

Bei einem eingesetzten System wird ein Anzeigeprozessor verwendet, der sämtliche zugeführten Daten, d.h. sowohl die Zieldaten als auch die konsolenspezifischen Daten und Hintergrundinformationsdaten,. in einer Recheneinheit gemeinsam aufbereitet und sie dann in geordneter Form an die Auffrischungskanäle zu den Bildschirmkonsolen weiterleitet.

Die Bearbeitung von Zieldaten ist sehr zeitkritisch. Bei einem eingesetzten Überwachungsradarsystem müssen beispielsweise in ca. 87 msec bis zu etwa 2000 Zieldaten-Koordinaten übertragen werden, die für alle angeschlossenen Bildschirmkonsolen, z.B. 10 Konsolen, entsprechend dem jeweils individuell eingestellten Bildausschnitt (Maßstab und Dezentrierung) umzurechnen sind. Diese Umrechnung umfaßt u.a. eine Koordinatentransformation und eine Ausschnittsfilterung. Konsolenspezifische Daten und Hintergrundinformationsdaten werden zwar nur relativ selten übertragen. Bei einer Änderung der Hintergrundinformation, die beispielsweise durch einen Tastendruck an irgendeiner der Konsolen initiiert werden kann, muß jedoch die komplett vorhandene Information bearbeitet werden. Um die Reaktionszeit des Systems, insbesondere bei gleichzeitiger Änderung an mehreren Konsolen dennoch möglichst kurz zu halten, ist auch hier eine schnelle Bearbeitung der Daten erforderlich.

Die Anzahl der anschließbaren Bildschirmkonsolen und die Durchsatzfähigkeit der vom Rechner kommenden Daten ist bei den eingesetzten Überwachungsradarsystemen stark beschränkt.

Aufgabe der Erfindung ist es, bei einem Überwachungsradarsystem der eingangs genannten Art den Anzeigeprozessor so auszubilden, daß im Vergleich zu den bekannten Systemen, mehr Konsolen angeschlossen werden können und auch die Datendurchsatzfähigkeit gesteigert wird.

Gemäß der Erfindung wird diese Aufgabe dadurch gelöst, daß im Anzeigeprozessor zwei parallel betriebene arithmetische Logikeinheiten vorgesehen sind, von denen die eine die Zieldaten und die andere die konsolenspezifischen Daten und Hintergrundinformationsdaten aufbereitet, daß der Datentransfer vom Rechner zu den arithmetischen Logikeinheiten von einer separaten eingangsseitigen Steuereinrichtung durchgeführt wird, die zusätzlich zum einen eine Abspeicherung der Zieldaten in einem der Logikeinheit für die Verarbeitung der Zieldaten vorgeschalteten Zieldatenspeicher und zum anderen eine Abspeicherung der konsolenspezifischen Daten und Hintergrundinformationsdaten in einem der Logikeinheit für die Verarbeitung dieser Daten vorgeschalteten Konsolendatenspeicher vornimmt, daß zur Verarbeitung von Informationen zwischen den arithmetischen Logikeinheiten und den einzelnen Konsolen ebenfalls eine separate Steuerungseinrichtung vorgesehen ist, die insbesondere dafür sorgt, daß Konsolenstatuswerte, z.B. aktuelle Einstellungen von Maßstab und Dezentrierung aller Konsolen, in den beiden Datenspeichern für die Koordinatentransformation zur Verfügung stehen, und daß im Anzeigeprozessor ausgangsseitig eine Steuerungseinrichtung mit einem elektronischen Schalter für die Beaufschlagung der den Auffrischungskanälen zugeordneten Ausgabeschnittstellen vorgesehen ist, der die in der Zieldatenlogikeinheit und in der Konsolendatenlogikeinheit aufbereiteten Daten zugeführt und von der diese Daten in hinsichtlich der Weiterleitung an die jeweiligen Auffrischungskanäle koordinierter Form ausgegeben werden.

Die Aufteilung des Anzeigeprozessors in zwei arithmetische Logikeinheiten und die Verwendung der Steuerungseinrichtung gemäß der Erfindung ergibt eine insgesamt kürzere Rechenzeit, da beide arithmetischen Logikeinheiten gleichzeitig und unabhängig voneinander die ihnen jeweils zugeteilten Daten getrennt aufbereiten können. Bei den in den bekannten Systemen verwendeten Anzeigeprozessoren ergibt sich dagegen ein Konflikt bei der Rechenzeitzuteilung, da alles in der einzigen Recheneinheit bearbeitet werden muß, zumal zu beachten ist, daß bei der Bearbeitung die Zieldaten gegenüber den übrigen Daten Vorrang haben und deswegen bei Überlastung z.B. bereits ablaufende Aufbereitungsvorgänge von Hintergrundinformationsdaten abgebrochen und später wieder neu begonnen werden müssen. Beim Anzeigeprozessor des erfindungsgemäß ausgebildeten Systems werden die von ihrer Art her unterschiedlichen und als solche getrennt berechneten Grafikdaten erst nach der rechnerischen Aufbereitung und Sortierung zusammengeführt, so daß ein zeitlicher Konflikt nur noch bei der Übertragung an der Schnittstelle zu den Auffrischungskanälen entstehen kann, wenn derjenige Auffrischungskanal z.B. von den Zieldaten gerade belegt ist, der auch von Hintergrundinformationsdaten beaufschlagt werden müßte. Aber auch hier ist noch eine Trennung möglich, wenn in einem solchen Fall in der ausgangsseitigen Steuerungseinrichtung gerade anfallende, aber einem anderen Auffrischungskanal zuzuordnende Daten zu diesem Kanal weitergeleitet werden. In dieser Steuerungseinrichtung läßt sich eine vorteilhafte Koordination durch Warten und Einordnen in fast jedem Betriebsfall durchführen.

In der ausgangsseitigen Steuereinrichtung sind zur Beaufschlagung der Auffrischungskanäle in vorteilhafter Weise ein erster Pufferspeicher, z.B. in Form eines FIFO (First in - First out)-Speichers oder RAM-Speichers, für die aufbereiteten Zieldaten und ein gleichartiger zweiter Pufferspeicher für die aufbereiteten konsolenspezifischen Daten sowie die Hintergrundinformationsdaten vorgesehen, die verhindern, daß ein und derselbe Auffrischungskanal gleichzeitig von diesem Kanal zugeordneten Zieldaten einerseits und konsolenspezifischen Daten bzw. Hintergrundinformationsdaten andererseits beaufschlagt wird. Diese beiden Pufferspeicher ermöglichen somit auch, daß die Datenaufbereitung in den arithmetischen Logikeinheiten nicht blockiert wird.

Die beiden arithmetischen Logikeinheiten und zwei diesen beiden Logikeinheiten zugeordnete Sequenzer, die in der jeweiligen Logikeinheit für den Ablauf eines bestimmten Mikroprogramms sorgen, sind jeweils Bestandteil eines schnellen bipolaren 16 Bit-Mikroprozessorsystems, die für beide Logikeinheiten vorteilhaft hardwaremäßig gleich ausgebildet werden.

Die eingangsseitige Steuerungseinrichtung wird bei Verwendung von 16 Bit-Mikroprozessoren in vorteilhafter Weise dann mit einem Datenformatumwandler ausgestattet, der eine Wandlung von 32 Bit (Datenformat des Rechners) auf 16 Bit durchführt.

Alarmmeldungen werden in vorteilhafter Weise im Anzeigeprozessor über eine serielle Schnittstelle direkt an die jeweils adressierte Konsole weitergeleitet, wogegen Schnittstellen (Interface-)Testdaten zum Rechner zurück übertragen werden.

Die Erfindung wird im folgenden anhand von drei Figuren näher erläutert. Es zeigen

Fig. 1 das Blockschaltbildschema eines großräumig arbeitenden Überwachungsradarsystems mit einem Anzeigeprozessor und mehreren Bildschirmkonsolen,

Fig. 2 das prinzipielle Schema eines in einem solchen System verwendeten Anzeigeprozessors mit seinen Schnittstellen (Interfaces),

Fig. 3 ein Blockschaltbild eines gemäß der Erfindung ausgebildeten Anzeigeprozessors mit seinen Steuerungseinrichtungen.

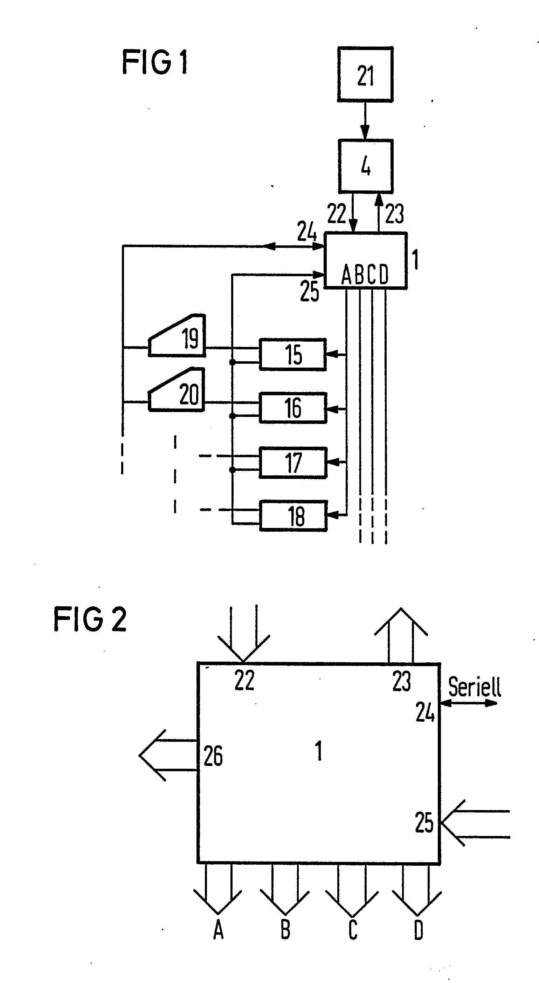

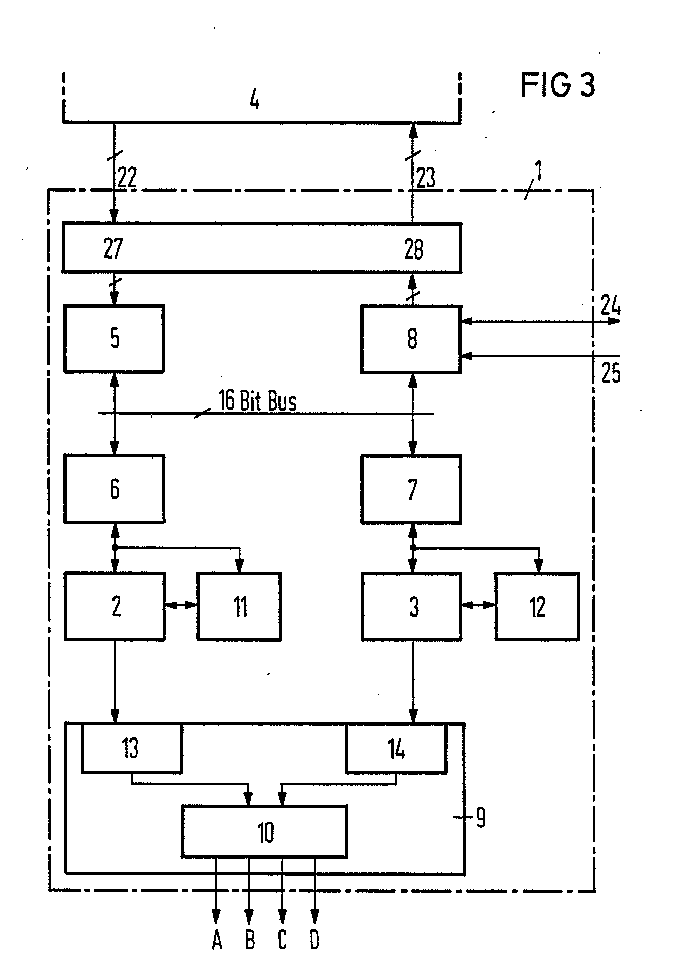

Das in Fig. 1 schematisch dargestellte Großraum-Überwachungsradarsystem besteht aus einem Radargerät 21, dessen Zielinformationen zur weiteren Bearbeitung und zur Erzeugung von entsprechenden Grafikdaten einem Rechner 4 zugeführt werden, der außerdem noch andere Grafikdaten, wie Linien, Kreise, Texte, Spuren oder dergleichen für die Hintergrundinformation, Zielbetextung oder andere Kennzeichnungen konsolenadressiert erzeugt. Ein Anzeigeprozessor 1 erhält vom Rechner 4 diese Grafikdaten und führt mit diesen Daten Berechnungen durch. Der Anzeigeprozessor 1 sendet die aufbereiteten Daten über vier Ausgabeschnittstellen A,B,C und D an jeweils bis zu vier sogenannte Auffrischungskanäle 15,16,17 und 18 pro Ausgabeschnittstelle um die Grafikdaten auf maximal sechzehn jeweils in Konsolen 19,20 untergebrachten Bildschirmen sichtbar zu machen. Einzelheiten dieses Systems werden im Zusammenhang mit der Beschreibung der Figuren 2 und 3 erläutert.

In Fig. 2 ist als Block ein in einem solchen System verwendeter Anzeigeprozessor 1 mit seinen Schnittstellen dargestellt. In der vorgesehenen Anwendung lassen sich die vom Rechner 4 kommenden und der Schnittstelle 22 zugeführten Daten in die vier folgenden Gruppen einteilen. Die erste Gruppe sind die Zieldaten, d.h. die augenblicklichen und die zeitlich vorhergehenden Zieldaten. Die zweite Gruppe sind die sogenannten Konsolendaten, d.h. konsolenspezifische Daten und Hintergrundinformationsdaten, wie Linien, Kreise, Texte und Spuren. Die dritte Gruppe besteht aus Alarmmeldungen und die vierte Gruppe aus Schnittstellen-Testdaten. Eine Schnittstelle 23 dient zur Rückführung von Daten und Meldungen zum Rechner 1. Die Übertragung von Informationen zwischen dem Anzeigeprozessor 1 und den einzelnen sternförmig angeschlossenen Konsolen erfolgt seriell über eine Schnittstelle 24. Die im Anzeigeprozessor 1 aufbereiteten Zieldaten, konsolenspezifische Daten und Hintergrundinformationsdaten werden über die Ausgabeschnittstellen A,B,C,D den zu den Konsolen führenden Auffrischungskanälen zugeführt. Von diesen Auffrischungskanälen lassen sich über eine Schnittstelle 25 dem Anzeigeprozessor 1 auch Eingabe-Textinformationen zuführen. Diese Schnittstelle 25 ist allerdings im Zusammenhang mit der Erfindung genauso unwesentlich wie die Schnittstelle 26, welche Prüfpunkte für Testsignale liefert. Der an die Schnittstellen 22 und 23 angeschlossene Rechner 4 arbeitet in einem Wortformat von 32 Bit.

Alarmmeldungen werden über die serielle Schnittstelle 24 direkt an die jeweils adressierte Konsole weitergeleitet, während Schnittstellen-Testdaten lediglich zum Rechner 4 zurück übertragen werden müssen, d.h. sie laufen von der Schnittstelle 22 über den Anzeigeprozessor 1 zur Schnittstelle 23.

In Fig.3 ist in einem Blockschaltbild die Architektur eines gemäß der Erfindung ausgebildeten Anzeigeprozessors 1 dargestellt. Mit einem derart ausgebildeten Anzeigeprozessor 1 wird eine zeitoptimierte Bearbeitung der vom Rechner 4 zugeführten Grafikdaten gewährleistet. An die Schnittstelle 22, welche die vom Rechner 4 kommenden Grafikdaten aufnimmt, ist ein Empfänger 27 angeschlossen, wogegen die an den Rechner 4 abgegebenen Signale über einen Treiber 28 an die Schnittstelle 23 geführt werden. Die Verarbeitung der vom Empfänger 27 kommenden Grafikdaten wird mit zwei schnellen, bipolaren 16 Bit-Mikroprozessoren ausgeführt, die jeweils aus einer arithmetischen Logikeinheit 2 bzw. 3 und einem Sequenzer 11 bzw. 12 bestehen, welche für den Ablauf eines bestimmten Mikroprogramms sorgen. Die beiden arithmetischen Logikeinheiten 2 und 3 mit ihren Sequenzern 11 bzw. 12 arbeiten gleichzeitig und möglichst unabhängig voneinander. Dabei bearbeitet die Logikeinheit 2 die Zieldaten und die Logikeinheit 3 die sogenannten Konsolendaten, d.h. die konsolspezifischen Daten und die Hintergrundinformationsdaten. Die beiden Logikeinheiten 2 und 3 sowie die beiden Sequenzer 11 bzw. 12 basieren auf möglichst identischer Hardware.

Der Datentransfer vom Rechner 4 zum Anzeigeprozessor 1 wird von einer separaten Steuerungseinrichtung 5 durchgeführt, die zusätzlich auch eine inhaltsbezogene Datenformat-Umwandlung von 32 Bit, dem Datenformat des Rechners 4, auf 16 Bit, dem Datenformat der Logikeinheiten 2 und 3, und eine Abspeicherung der Grafikdaten in entsprechende Datenspeicher, nämlich einem Zieldatenspeicher 6 und einem Konsolendatenspeicher 7, vornimmt. Die Verarbeitung von Informationen zwischen dem Anzeigeprozessor 1 und den einzelnen an der Schnittstelle 24 liegenden Konsolenanschlüsse wird mittels einer Steuerungseinrichtung 8 ebenfalls separat gesteuert. Diese Steuerungseinrichtung 8 sorgt insbesondere dafür, daß Konsolenstatusworte, z.B. aktuelle Einstellungen des Maßstabs und der Dezentrierung aller Konsolen in den beiden Speichern 6 und 7, für die Koordinatentransformation zur Verfügung stehen. Eine ausgangsseitige Steuerungseinrichtung 9 sorgt dafür, daß die aufbereiteten Zieldaten und Konsolendaten über die vier Ausgabeschnittstellen A,B,C,D an die Auffrischungskanäle zu den Konsolen ausgegeben werden. Die getrennt in den Logikeinheiten 2 bzw.

3 berechneten Zieldaten bzw. Konsolendaten werden nach der rechnerischen Aufbereitung und Sortierung in der Steuerungseinrichtung 9 zusammengeführt, so daß ein zeitlicher Konflikt nur bei der Übertragung an den Schnittstellen A,B,C,D zu den Auffrischungskanälen entstehen kann, wenn derjenige Auffrischungskanal z.B. gerade von den Zieldaten belegt ist, der im gleichen Augenblick von Hintergrundinformationsdaten beaufschlagt werden müßte. Aber auch hier ist noch eine Trennung möglich, wenn in einem solchen Fall in der ausgangsseitigen Steuerungseinrichtung 9 gerade anfallende, einem anderen Auffrischungskanal zugeordnete Daten zu diesem Auffrischungskanal weitergeleitet werden. In dieser Steuerungseinrichtung 9 läßt sich eine vorteilhafte Koordination durch Warten und Einordnen in fast jedem Betriebsfalle durchführen. Außer dem die Durchschaltung der Daten zu den Schnittstellen A,B,C und D besorgenden Schalter 10 weist die ausgangsseitige Steuerungseinrichtung 9 einen ersten Pufferspeicher, z.B. in Form eines RAM-Speichers oder eines FIFO-Speichers, für die aufbereiteten Zieldaten und einen gleichartigen zweiten Pufferspeicher 14 für die aufbereiteten konsolenspezifischen Daten sowie die Hintergrundinformationsdaten auf. Diese beiden Pufferspeicher 13 und 14 verhindern, daß ein und derselbe Auffrischungskanal gleichzeitig von diesem Kanal zugeordneten Zieldaten einerseits und konsolenspezifischen Daten bzw. Hintergrundinformationsdaten andererseits beaufschlagt wird, und sie ermöglichen, daß die Datenaufbereitung in den arithmetischen Logikeinheiten 2 und 3 nicht blockiert wird.

## Ansprüche

1. Überwachungsradarsystem mit mehreren in Konsolen untergebrachten, mit unterschiedlichen Grafikdaten ansteuerbaren Bildschirmen unter Verwendung eines Anzeigeprozessors, der von einem Rechner Grafikdaten, insbesondere Zieldaten, konsolenspezifische Daten, Hintergrundinformationsdaten in Form von Linien, Kreisen, Texten, Spuren oder dergleichen, Alarmmeldungen und Schnittstellentestdaten, erhält, diese Daten unter Einbeziehung der individuellen Konsolenanforderungen aufbereitet und nach dieser Aufbereitung über mehrere Ausgabeschnittstellen an sogenannte Auffrischungskanäle an die Konsolenbildschirme zur dortigen Sichtbarmachung weiterleitet, **dadurch gekennzeichnet,** daß im Anzeigeprozessor (1) zwei parallel betriebene arithmetische Logikeinheiten (2,3) vorgesehen sind, von denen die eine (2) die Zieldaten und die andere die konsolenspezifischen Daten und Hintergrundinformationsdaten aufbereitet, daß der Datentransfer vom Rechner (4) zu den arithmetischen Logikeinheiten (2,3) von einer separaten eingangsseitigen Steuerungseinrichtung (5) durchgeführt wird, die zusätzlich zum einen eine Abspeicherung der Zieldaten in einem der Logikeinheit (2) für die Verarbeitung der Zieldaten vorgeschalteten Zieldatenspeicher (6) und zum anderen eine Abspeicherung der konsolenspezifischen Daten und Hintergrundinformationsdaten in einem der Logikeinheit (3) für die Verarbeitung dieser Daten vorgeschalteten Konsolendatenspeicher (7) vornimmt, daß zur Verarbeitung von Informationen zwischen den arithmetischen Logikeinheiten (2,3) und den einzelnen Konsolen ebenfalls eine separate Steuerungseinrichtung (8) vorgesehen ist, die insbesondere dafür sorgt, daß Konsolenstatusworte, z.B. aktuelle Einstellungen von Maßstab und Dezentrierung aller Konsolen, in den beiden Datenspeichern (6,7) für die Koordinatentransformation zur Verfügung stehen, und daß im Anzeigeprozessor (1) ausgangsseitig eine Steuerungseinrichtung (9) mit einem elektronischen Schalter (10) für die Beaufschlagung der den Auffrischungskanälen zugeordneten Ausgabeschnittstellen (A,B,C,D) vorgesehen ist, der die in der Zieldatenlogikeinheit (2) und in der Konsolendatenlogikeinheit (3) aufbereiteten Daten zugeführt und von der diese Daten in hinsichtlich der Weiterleitung an die jeweiligen Auffrischungskanäle koordinierter Form ausgegeben werden.

2. Überwachungsradarsystem nach Anspruch 1,
**dadurch gekennzeichnet,** daß den beiden arithmetischen Logikeinheiten (2,3) jeweils ein Sequenzer (11,12) zugeordnet ist, der in der jeweiligen Logikeinheit für den Ablauf eines bestimmten Mikroprogramms sorgt.

3. Überwachungsradarsystem nach Anspruch 1 und 2,
**dadurch gekennzeichnet,** daß jede der beiden arithmetischen Logikeinheiten (2,3) und der jeweils zugeordnete Sequenzer (11,12) Bestandteile eines schnellen bipolaren 16 Bit-Mikroprozessors sind und hardwaremäßig gleich ausgebildet sind.

4. Überwachungsradarsystem nach einem der vorhergehenden Ansprüche, **dadurch gekennzeichnet,** daß die eingangsseitige Steuerungseinrichtung (5) einen inhaltsbezogenen Datenformatumwandler von z.B. 32 Bit des Rechners (4) auf 16 Bit der beiden Logikeinheiten (2,3) enthält.

5. Überwachungsradarsystem nach einem der vorhergehenden Ansprüche, **dadurch gekennzeichnet,** daß in der ausgangsseitigen Steuerungseinrichtung (9) zur Beaufschlagung der Auffrischungskanäle (A,B,C,D) ein erster Pufferspeicher (13), z.B. in Form eines FIFO (First in - First out)- Speichers oder RAM-Speichers, für die aufbereiteten Zieldaten und ein gleichartiger zweiter Pufferspeicher (14) für die aufbereiteten konsolenspezifischen Daten sowie Hintergrundinformationsdaten vorgesehen ist, die beide verhindern, daß ein und derselbe Auffrischungskanal gleichzeitig von diesem Kanal zugeordneten Zieldaten einerseits und konsolenspezifischen Daten bzw. Hintergrundinformationsdaten andererseits beaufschlagt wird, und es ermöglichen, daß die Datenaufbereitung in den arithmetischen Logikeinheiten (2,3) nicht blockiert wird.

6. Überwachungsradarsystem nach einem der vorhergehenden Ansprüche, **dadurch gekennzeichnet,** daß Alarmmeldungen über eine serielle Schnittstelle direkt an die jeweils adressierte Konsole weitergeleitet werden.

7. Überwachungsradarsystem nach einem der vorhergehenden Ansprüche, **dadurch gekennzeichnet,** daß Schnittstellen (Interface-)Testdaten zum Rechner (4) zurück übertragen werden.

**FIG 1**

**FIG 2**

FIG 3